# EUROPEAN PATENT APPLICATION

(11) **EP 3 007 056 A1**
(43) Date of publication of application: **13.04.2016**
(21) Application number: 15190443.0
(22) Date of filing: 25.05.2007
(51) Int. Cl.: G06F 3/06

(54) **METHOD FOR COMMUNICATION WITH A MULTI-FUNCTION MEMORY CARD**

(30) Priority: 29.05.2006 EP 06114648; 26.01.2007 US 886721 P
(62) Divisional of application: 07729544.2
(71) Applicant: Certgate GmbH, 90409 Nürnberg (DE); Deutsche Telekom AG, 53113 Bonn (DE)
(72) Inventor: Papagrigoriou, Paschalis, 90482 Nürnberg (DE)
(74) Representative: Cohausz & Florack

(57) **Abstract**

In the method for communication with a multi-function memory comprising a card controller and a functional module carrying out at least one data processing function which is different from the data storage function of a memory card, it is provided that, for initiating the at least one data processing function of the functional module, for communication with the functional module and for retrieval of data processed by the functional module corresponding to this data processing function, use is made of standardized write and read commands of the type used for addressing the data memory of a memory card.

## Description

The invention relates to a method for communication with a multi-function memory card, said card comprising a card controller and a functional module carrying out at least one data processing function which is different from the data storage function of a memory card. Under the technical aspect, the functional module can also be integrated, together with the card controller, in a component. A memory card within the meaning of the invention is a peripheral comprising a card controller which ensures that the peripheral can be identified as a memory card by a host computer. A physical memory module is not necessarily required. A multi-function memory card within the meaning of the invention thus is a memory card of the aforementioned type comprising at least one additional functional module.

Memory cards are a product of miniaturization and of increasing storage capacities. They have accomplished a commercial breakthrough, have found wide distribution and meanwhile have become established as a standard feature in mobile end devices such as notebooks, PDAs, cell phones, photo cameras etc. A wide variety of memory cards have been recently introduced, each having different capacities, access speeds, formats, interfaces and connectors. Examples of memory cards include CompactFlash^{™} (CF), the Memory Stick^{™} (MS), and subsequent versions including Memory Stick Pro and Memory Stick Duo Smart Media^{™} memory cards, Secure Digital (SD^{™}) memory cards, microSD^{™}, miniSD^{™}, PC cards, MultiMediaCards^{™}(MMC), RS-MMC^{™}, and xD^{™} digital memory cards.

Further, the simultaneous development of mobile phone technologies and the widespread distribution of the corresponding end devices have led to increased demands on mobility from the viewpoint of the use of these end devices in diverse application areas and particularly under the security aspect.

Decisive for the communication between applications of end devices (PC, notebook, PDA, cell phone etc.) and memory cards are the specifications of the respective organizations (e.g. the SD Association for SD cards, the MMC Association for MMC cards etc.), and the command sets defined in these specifications. Each card type (form factor) requires a card reading/writing device which is operated via specific device drivers for the respective operating system of the end device.

Apart from other extensions of memory cards by functional modules to a Bluetooth Card, WLAN Card, Radio Card etc., the industrial standard Mc-Ex (Mobile Commerce Extension Standard) further made it possible to realize the idea of using a memory card in combination with a crypto controller (also referred to as a secure flash memory card). Several products for this purpose are already under way or are even commercially available. Such a configuration is also shown in EP-A-1 596 326.

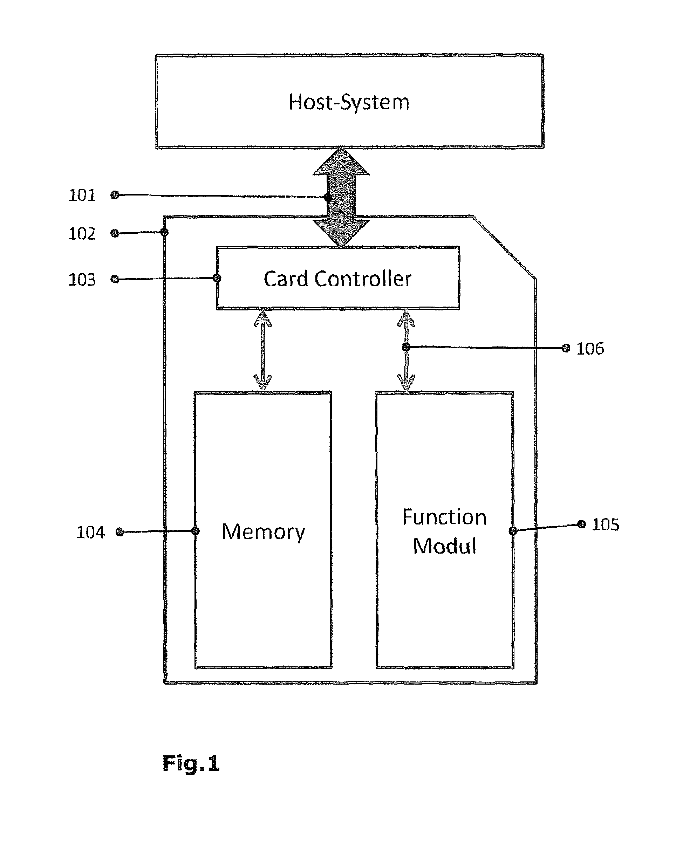

Fig. 1 is a schematic illustration of a known flash memory card with integrated crypto controller (also referred to as smart card controller) as an example of a multi-function memory card. The invention relates to a novel type of communication with such a card in which at least one further peripheral is integrated. Another peripheral may be a crypto controller, for example.

To render it possible that, via the same data interface of such a memory card and its flash memory controller, communication can be controlled and carried out simultaneously both with the flash memory component and with the smart card controller as an example of a functional module, it is necessary that the original specifications for flash memory cards are extended and adapted, respectively. Thus, for instance, additional commands have been included, or previously reserved command names (dummies; commands without defined functions) can be used for enabling or controlling a flash memory controller correspondingly prepared/provided for this purpose to respectively address the correct component (e.g. flash memory or smart card controller) and to communicate with it.

As a result of this fact, the device drivers which previously existed only for memory cards must now be upgraded or replaced to enable them to transmit and receive also the new or upgraded commands to/from the memory cards with extended functionality (e.g. a flash memory card with integrated crypto controller) or to communicate with these memory cards. These upgraded or new drivers will now be capable to communicate also on the device side with different applications and to exchange the data which are provided for the memory of a memory card as well as for other integrated functional components, as exemplified in EP-A-1 596 326.

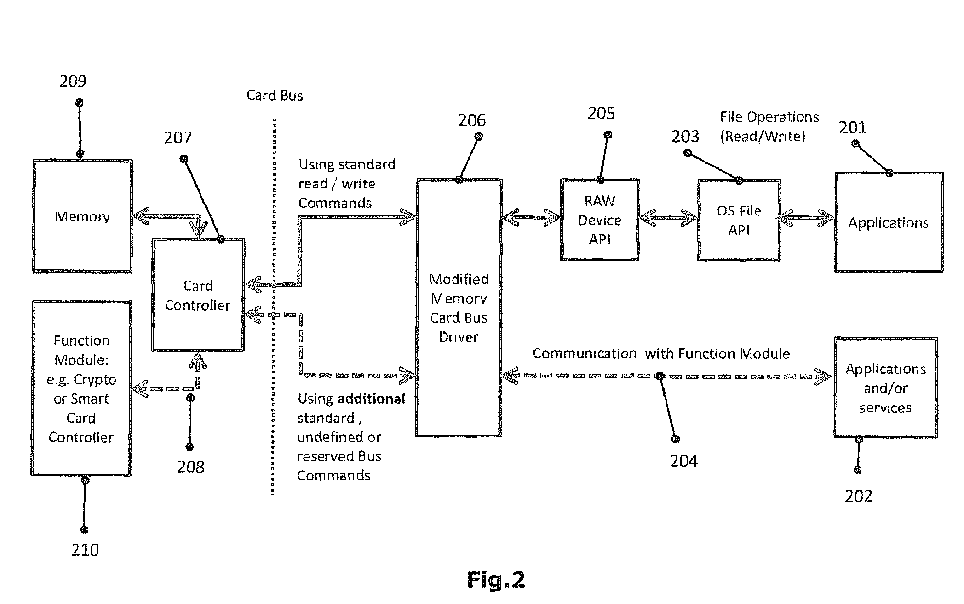

Subsequently, a process related to the function of such device drivers and the requirements posed to it will be exemplified hereunder with reference to a "secure flash memory card" (flash memory card with integrated crypto controller, see Fig. 2):
Part 1:
   An application (e.g. MS Word or File Explorer) (position 201) is to edit or generate a file which has been - or is being - stored in the flash memory of a flash memory card. Using the file system level, and subsequently using the logical mapping of the memory of the memory card (raw device 205), the operations and the data are passed to the device driver of a flash memory card 206 which in turn will translate them into the respective specification of the interface to the flash memory card and will transmit them to the flash memory controller 207. The flash memory controller will then carry out the actual reading and writing operations on the flash memory 209.
Part 2:
   A safety-relevant application (e.g. a VPN client) at the same time requires a cryptographic operation (e.g. the signing of data or the verifying of a PIN) which ultimately is to be carried out on the crypto controller 210 integrated in the memory card. In analogy to part 1 of the example, these operational requirements are directly transferred/forwarded to the correspondingly modified card bus driver 206 (Fig. 2, 204). This correspondingly modified device driver 206 will translate the operation request in dependence on the respective interface specifications of the flash memory card type and will transmit to the flash memory controller 207 the commands and data which are now destined for the crypto controller. Thus, because of the commands and/or card bus commands defined for the crypto controller, the flash memory controller takes up the communication with the crypto controller.

The above example is not only intended to demonstrate the complexity of the device drivers required or upgraded for the above purpose and the complexity of the communication requirements posed to such a device driver with regard to a secure flash memory card as referred to in the example. Still further dimensions of complexity have to be added. Such a device driver software will always have to be especially developed for a large variety of operating systems (MS Windows, LINUX, Windows Mobile, SYMBIAN, Palm OS etc.) and for a large variety of hardware architectures or models of end devices, as far as a wider range of uses is desired. Also to be considered are the rapid ongoing development of the hardware and the short life cycles of these end devices.

In all known methods for communicating with and controlling an additional (further) peripheral via a communication bus (e.g. secure digital card bus) not directly provided for this device, generally special commands and/or "predetermined memory card commands" are used. Concerning the transfer of additional control information via commands which are provided and standardized for a communication bus, reference is made to US-B-6 735 650 regarding prior art. Here, a method is described which is applied in the field of serial ATA hard disks, but not in the field of memory cards, in particular in mobile end devices. Further, such a method cannot be used for solving the problems described above since the method applied is not provided for controlling or communicating with additional peripherals but for performing additional functions of the device controller of a SATA hard disk which serve for manufacturer-specific diagnosis purposes. Transfer of said additional control information specific to said device controller first requires the setup, initiated by specific commands, of a special logical communication channel which remains switched on until the communication is terminated and is then also switched off via special commands. The commands for setting up and terminating the special communication channel differ from those used for access to the hard disk for the purpose of reading and writing data (see e.g. column 4, line 10, to column 5, line 64 of US-B-6 735 650).

It is an object of the invention to allow communication with a and/or the control of an additional peripheral (functional module) via the communication bus provided for the memory card, which communication bus is not inherently provided for communication with/control of the peripheral.

To achieve said object, the invention proposes a method as defined in claim 1. Advantageous embodiments of the method are described in the subclaims.

The invention thus proposes a method for communication of a host system with a multi-function memory card, wherein said method is used for initiating the at least one data processing function of the functional module and/or for communicating with said functional module and/or for retrieving data processed by the functional module in accordance with its data processing function. These communication activities do not present any time sequence/concatenation. The special feature of the method according to the invention is that for such communication activities standardized writing and reading commands are used, such as those employed for addressing the data memory of a memory card. The communication with the additional functional module (additional peripheral) of the memory card is thus performed in exactly the same manner as the communication with the data memory of a memory card.

The multi-function memory card, with which communication takes place according to the invention, may comprise one or a plurality of functional modules. The one or the plurality of functional modules can comprise the functionality of a crypto/smard card controller, a Bluetooth card, a WLAN card and/or a radio card.

The invention will now be described in greater detail with reference to the drawings in which:
- Fig. 1: schematically shows the setup of a multi-function memory card comprising a communication channel extending to a higher-revel system (host system),
- Fig. 2: schematically shows the process (with functional blocks) in the case of a prior art communication with multi-function memory cards; and
- Fig. 3: schematically shows the setup during communication (with functional blocks) according to an embodiment of the invention.

Also Fig. 1 illustrates the basic setup of a multi-function memory card to be used as proposed by the invention, wherein the functional module - is controlled through standardized card reading and writing storage commands which are normally used for transferring user data to and from memory cards.

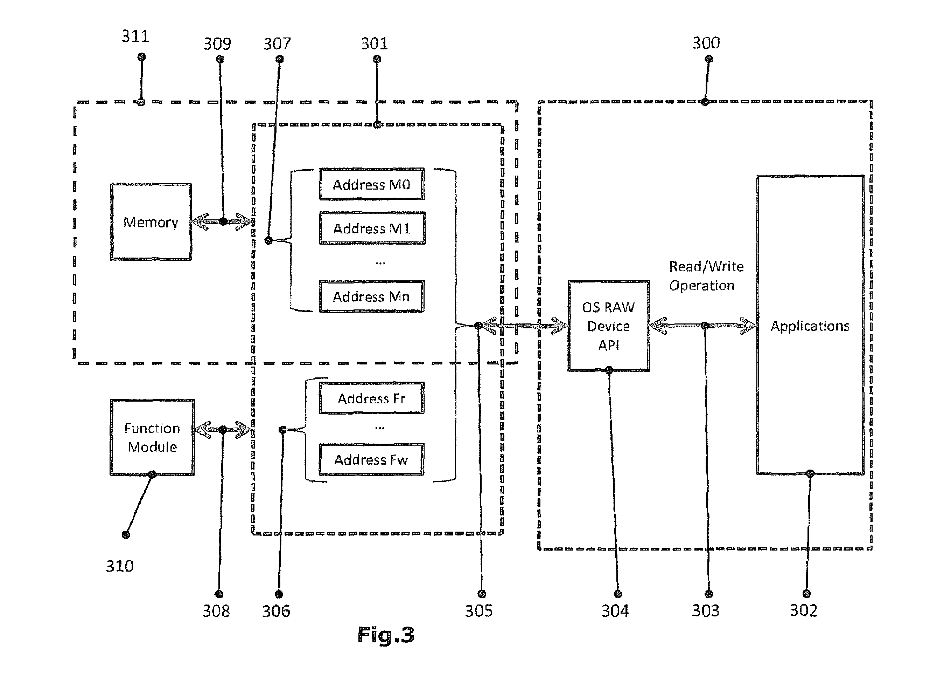

In the inventive method for communication with multi-function memory cards, and concretely with a functional module additionally integrated in said memory cards, the complexity described above is entirely eliminated, as shown in Fig. 3. The communication between an application software 302 (e.g. a safety-relevant application) and the functional module 310 (e.g. a crypto controller) of a multi-function memory card (e.g. a "secure" flash memory card) used according to the invention will require, on the device side, only a part of the functionality of the device driver software as already existing for memory cards provided exclusively with memory functions. This means that one will exclusively use memory card commands which are provided for usual read/write accesses for user data of the memory on an address level of a (flash) memory card.

The - particularly economical - advantage of this development provided by the invention resides in that, for the use of multi-function memory cards (e.g. flash memory cards with integrated crypto controller), no modification of thedevice driver software for the memory cards is required, but only the device drivers which have already been pre-installed in the end device by the manufacturer for use of the normal memory functionality.

The inventive use of such multi-function memory cards (upgraded and/or adapted memory cards) is based merely on the modifications of the operating software of some components (e.g. the firmware of the flash memory controller) of these memory cards.

In other words, the invention is related to a method for the communication with multi-function memory cards without posing particular requirements to the device driver software for memory card readers of the respective operating systems and/or the respective manufacturers.
a) In this connection, the firmware of the memory card controller (see 301 in Fig. 3) used is upgraded and modified, respectively, in such a manner that the memory card controller, upon receipt of a write command on the side of the host system 300, which write command is to trigger a write process on the memory component with data content which is to be written into a special address of the memory component (this address (Fig. 3, 306, e.g. Fw) is predefined and known to the memory card controller) - will instead take up communication with the functional component, which additionally to the possibly existing memory component is linked to the memory card controller, and will redirect the supplied data contents to the functional component (see at 308 in Fig. 3).
b) Further, the memory card controller used is upgraded and modified, respectively, in such a manner that the memory card controller, upon receipt of a read command on the side of the host system, provided for a reading process on the memory component, will (possibly also after temporary storage) transmit to the host system the response data of the functional component which additionally exists in the multi-function memory card, only if the read command is addressing data contents which are to be stored in a special address of the memory component (this address (see 306 in Fig. 3, e.g Fr) is fixedly predefined and is known to the memory card controller).

Through a suitable formatting of the card memory it can be ensured that the aforementioned special addresses are always made known to the operating system, but are not used by the operating system on the file operation level. The method according to the invention thus neither influences the implementation of the memory card bus driver nor the technology applied for realizing the interface between the host computer 300 and a normal memory card311. The applications concerned (see Fig. 3 ,at 302) can thus always communicate with the functional module via the interface 303 existing in any case of the memory card, namely exclusively via the operating system-independent standard read/write commands of said interface.

Neither initiation of the data processing function of the functional module nor communication with the functional module or retrieval of data processed by the functional module in accordance with said data processing function pose special requirements to the device drivers already existing in the host computer or to the normal communication between the device drivers and the memory card for the purpose of carrying out the method according to the invention.

With respect to the above, according to the invention the multi-function memory card does not necessarily have to include also a memory module. What is decisive is that the card presents itself as a memory card towards the host system and the operating system; for the invention, notably, it is essential that the card is addressable by write and read commands as are known in data memory addressing so that, toward the host system and the operating system, respectively, the card will act like a quite normal memory card.

A multi-function memory card suitably configured for carrying out the above method is characterized in that, for this card, there are used the card read/write devices provided, wire-connected or wireless, for the conventional memory function of this card, notably without further installation of specially dedicated device drivers for this additional functionality of the multi-function memory card.

To be counted among the possible end devices are e.g. PCs, notebooks, PDAs, smart phones, cell phones or intelligent combined devices such as e.g. printers and photo cameras with optional data processing, while the operating systems of the end devices can be e.g. MS Windows, LINUX, Windows CE, Windows Mobile, Symbian, PalmOS, Pocket LINUX etc.

Furthermore, the following embodiments are disclosed:
Embodiment 1: A method for communication with a multi-function memory card, said memory card comprising a card controller and a functional module carrying out at least one data processing function which is different from the data storage function of a memory card, wherein
   - for initiating the at least one data processing function of the functional module, for communication with the functional module and for retrieval of data processed by the functional module corresponding to this data processing function, use is made of standardized write and read commands of the type used for addressing the data memory of a memory card.
Embodiment 2: The method according to embodiment 1, characterized in that the multi-function memory card comprises a memory address range within which the memory card is addressable, and that the memory address range includes memory addresses via which the multi-function memory card is addressed for initiating the at least one data processing function of the functional module, for communication with the functional module and for retrieval of data processed by the functional module corresponding to this data processing function.
Embodiment 3: The method according to embodiment 1 or 2, characterized in that the multi-function memory card comprises at least one a memory module.
Embodiment 4: The method according to any one of embodiments 1 to 3, characterized in that the multi-function memory card comprises a plurality of functional modules.
Embodiment 5: The method according to any one of embodiments 1 to 4, characterized in that the at least one functional module or the plurality of functional modules comprises/comprise the functionality of a crypto/smart card controller, a Bluetooth card, a WLAN card and/or a radio card.
Embodiment 6: The method according to any one of embodiments 1 to 5, characterized in that the functional module together with a memory card controller is integrated in a component.

## Claims

1. Multi-function memory card, said multi-function memory card comprising:
- a functional module for carrying out at least one data processing function,
wherein said at least one data processing function is different from a data storage function,
- a memory module,
and
- a card controller,
wherein said card controller is modified to, upon receipt of a write command from a host system, said write command triggering a write process on said memory module with data content which is to be written into a special address of said memory module, redirect said data content to said functional module, and wherein said card controller is further modified to, upon receipt of a read command for a reading process on said memory module from said host system, transmit response data of said functional module to said host-system if said read command is addressing data content which is to be stored in a special address of said memory module.

2. Multi-function memory card according to claim 1, wherein said multi-function memory card is configured to present itself as a memory card towards said host system.

3. Multi-function memory card according to claim 1 or 2, wherein said special addresses are known to said card controller.

4. Multi-function memory card according to any one of claims 1 to 3, wherein said functional module is different from said memory module and said card controller.

5. Multi-function memory card according to any one of claims 1 to 4, wherein said functional module together with said card controller is integrated in a component.

6. Multi-function memory card according any one of claims 1 to 5, wherein said at least one functional module is or comprises the functionality of a crypto controller and/or a smart card controller.

7. Multi-function memory card according any one of claims 1 to 6, wherein said multi-function memory card comprises a plurality of functional modules.

8. Multi-function memory card according any one of claims 1 to 7, wherein use is made of write and read commands for initiating said at least one data processing function of said functional module of said multi-function memory card and/or for communication with said functional module of said multi-function memory card and/or for retrieval of data processed by said functional module of said multi-function memory card.

9. Method for communication of a host system with a multi-function memory card according to any one of claims 1 to 7, wherein use is made of write and read commands for initiating said at least one data processing function of said functional module of said multi-function memory card and/or for communication with said functional module of said multi-function memory card and/or for retrieval of data processed by said functional module of said multi-function memory card.
